# EUROPÄISCHE PATENTANMELDUNG

(11) **EP 1 477 325 A2**
(43) Veröffentlichungstag der Anmeldung: **17.11.2004**
(21) Anmeldenummer: 04011351.6
(22) Anmeldetag: 13.05.2004
(51) Int. Cl.: B42D 15/04, B42D 15/00

(54) **Faltbare Karte**

(30) Priorität: 15.05.2003 DE 20307577 U
(71) Anmelder: Nettsträter, Heinz, 59590 Geseke (DE)
(72) Erfinder: Nettsträter, Heinz, 59590 Geseke (DE)
(74) Vertreter: Graefe, Jörg

(57) **Zusammenfassung**

Faltbare Karte (1), insbesondere Radwander- oder Wanderkarte, umfassend einen bedruckten Kartenbogen (2), wobei der Kartenbogen (2) beidseitig eine wasserabweisende Beschichtung aufweist.

## Beschreibung

Die vorliegende Erfindung betrifft eine faltbare Karte, insbesondere eine Radwander- oder Wanderkarte, umfassend einen bedruckten Kartenbogen.

Faltbare Karten der eingangs genannten Art sind als Träger geographischer Informationen in vielfältigen Ausführungsformen bekannt. Sie umfassen einen gegebenenfalls beidseitig bedruckten Kartenbogen, der in der Regel aus Papier oder relativ dünner Pappe besteht.

Die bisher bekannt gewordenen Ausführungsformen faltbarer Karten haben den Nachteil, dass sie unter dem Einfluss von Feuchtigkeit aufweichen und demzufolge leicht reißen können. Ferner kann die Einwirkung von Feuchtigkeit dazu führen, dass die Druckfarben, die zum Bedrucken des Kartenbogens verwendet wurden, auswaschen. Insgesamt verschleißen die bisher bekannt gewordenen faltbaren Karten relativ rasch, insbesondere dann, wenn sie mit Wasser (beispielsweise Regenwasser) beziehungsweise anderen Flüssigkeiten oder Schmutz in Berührung kommen. Sie eignen sich daher nur eingeschränkt als Wander- oder Radwanderkarten, da ihre Nutzer bei Wanderungen oder Radwanderungen häufig Niederschlägen ausgesetzt sind.

Hier setzt die vorliegende Erfindung an. Aufgabe der vorliegenden Erfindung ist es, eine faltbare Karte der eingangs genannten Art zur Verfügung zu stellen, die feuchtigkeitsbeständig ist und eine erhöhte Verschleißfestigkeit aufweist.

Diese Aufgabe wird durch eine faltbare Karte der eingangs genannten Art mit den kennzeichnenden Merkmalen des Anspruchs 1 gelöst. Erfindungsgemäß ist vorgesehen, dass der Kartenbogen beidseitig eine wasserabweisende Beschichtung aufweist. Die sowohl auf der Vorderseite als auch auf der Rückseite der faltbaren Karte aufgebrachte wasserabweisende Beschichtung sorgt dafür, dass der Kartenbogen bei einem Kontakt mit Wasser oder anderen Flüssigkeiten nicht aufweicht. Ferner wird dadurch verhindert, dass die Druckfarben des bedruckten Kartenbogens auswaschen. Die erfindungsgemäße faltbare Karte ist gegenüber dem Einfluss von Wasser oder anderen Flüssigkeiten unempfindlich, so dass sich ihre Haltbarkeit verbessert.

In einer bevorzugten Ausführungsform ist vorgesehen, dass die wasserabweisende Beschichtung beschreibbar ist. Damit ist es möglich, dass der Nutzer der faltbaren Karte beispielsweise Radwander- bzw. Wanderstrecken oder sonstige Informationen und Notizen eintragen kann. Bei Verwendung eines wasserlöslichen Schreibstiftes können die seitens des Nutzers vorgenommenen Eintragungen auf einfache Weise wieder entfernt werden.

In einer vorteilhaften Ausführungsform umfasst die wasserabweisende Beschichtung eine transparente Kunststofffolie.

In einer besonders bevorzugten Ausführungsform ist vorgesehen, dass die transparente Kunststofffolie auf den Kartenbogen kaschiert ist. Auf diese Weise wird ein reißfester Verbund aus dem Kartenbogen und den auf der Vorderseite und auf der Rückseite des Kartenbogens aufkaschierten transparenten Kunststofffolien gebildet. Dazu werden transparente Kunststofffolien jeweils flächig auf beide Seiten des Kartenbogens der faltbaren Karte in an sich bekannter Weise kaschiert. Unter Einwirkung von Druck und Wärme wird dabei ein wasserfester, stabiler, aber dennoch faltbarer Verbund gebildet. Als Druckfarben für den Kartenbogen werden kaschiergeeignete, lösemittel- und alkaliechte und absolut durchgetrocknete Druckfarben verwendet. Bei der Kaschierung werden gegebenenfalls lösemittelfreie Klebstoffe oder Dispersionsklebstoffe, die als Ein- oder Zweikomponentensysteme ausgeführt sein können, eingesetzt.

Vorzugsweise weist die Kunststofffolie Polypropylen, gegebenenfalls auch orientiertes Polypropylen auf. Eine Propylenfolie zeichnet sich durch hohe Transparenz sowie gute Haltbarkeit aus. Sie ist reißfest, chemikalienbeständig, sowie schmutz- und wasserabweisend.

Die Kunststofffolie kann ferner Polyethylen, Polyester oder Acetat aufweisen.

In einer weiteren vorteilhaften Ausführungsform kann die Kunststofffolie auch Polyethylenterephthalat (PET) umfassen.

Um einen hinreichend stabilen Verbund zu erhalten und darüber hinaus die Faltbarkeit des Kartenbogens zu gewährleisten, sieht eine besonders bevorzugte Ausführungsform vor, dass der Kartenbogen Papier mit einer Grammatur zwischen 80 und 150 g/m², vorzugsweise zwischen 100 und 130 g/m², insbesondere zwischen 110 und 120 g/m² umfasst.

Um eine ausreichende Reißfestigkeit zu erhalten, sieht eine besonders vorteilhafte Ausführungsform vor, dass die Dicke der Kunststofffolie 7 bis 25 Mikrometer, vorzugsweise 10 bis 20 Mikrometer, insbesondere 12 bis 15 Mikrometer beträgt.

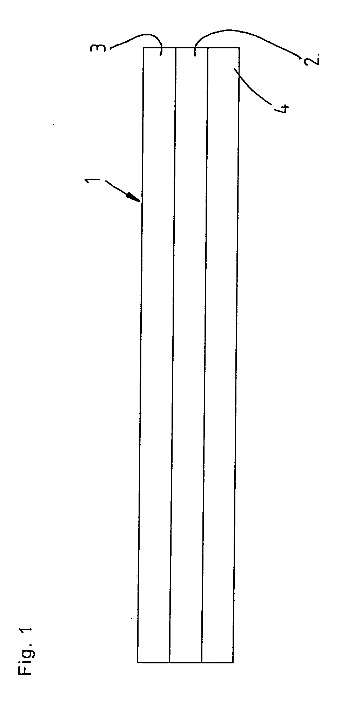

Nachfolgend wird die vorliegende Erfindung unter Bezugnahme auf die beiliegende Zeichnung näher beschrieben. Diese zeigt einen Abschnitt einer faltbaren Karte 1 im Schnitt. Die faltbare Karte 1 kann insbesondere eine Wander- oder Radwanderkarte sein.

Die faltbare Karte 1 umfasst einen bedruckten Kartenbogen 2 aus Papier. Um die Faltbarkeit der faltbaren Karte 1 zu gewährleisten besitzt das Papier, aus dem der Kartenbogen 2 gefertigt ist, eine Grammatur zwischen 80 und 150 g/m². Vorzugsweise beträgt die Grammatur etwa 110 bis 120 g/m². Auf einer Seite des Kartenbogens 2 ist eine erste Kunststofffolie 3 und auf der gegenüberliegenden Seite des Kartenbogens 2 ist eine zweite Kunststofffolie 4 aufgebracht. Die Kunststofffolien 3, 4 sind wasserabweisend und beispielsweise mittels eines Schreibstiftes, der vorzugsweise wasserlöslich ist, beschreibbar.

Der Kartenbogen 2, die erste Kunststofffolie 3 und die zweite Kunststofffolie 4 bilden einen wasserabweisenden Verbund, der darüber hinaus hinreichend reiß- und verschleißfest ist. Ferner ist die faltbare Karte 1 schmutzunempfindlich.

Die Aufbringung der ersten Kunststofffolie 3 und der zweiten Kunststofffolie 4, auf den Kartenbogen erfolgt durch Kaschierung. Dabei werden die Kunststofffolien 3, 4 flächig auf den Kartenbogen 2 aufkaschiert, so dass sie unter Einwirkung von Druck und Wärme einen Verbund bilden. Durch die Aufkaschierung der Kunststofffolien 3, 4 wird der bedruckte Kartenbogen 2 wirksam vor dem Einfluss von Nässe und Schmutz geschützt. Die gesamte Anordnung ist daher auch witterungsbeständig und als Wander- oder Radwanderkarte einsetzbar. Als Kunststofffolien 3, 4 kommen Polypropylenfolien, insbesondere solche, die orientiertes Polypropylen aufweisen, Polyethylenfolien, Polyesterfolien, Acetatfolien, Polyethylenterephthalatfolien sowie weitere zur Kaschierung geeignete Folien, die gegebenenfalls Anteile der eben genannten Stoffe enthalten können, in Betracht.

Damit die Anordnung hinreichend stabil ist, beträgt die Dicke Kunststofffolien 3, 4 etwa 7 bis 25 Mikrometer, vorzugsweise 10 bis 20 Mikrometer, insbesondere 12 und 15 Mikrometer.

### Bezugszeichenliste

- 1: Karte
- 2: Kartenbogen
- 3: erste Kunststofffolie
- 4: zweite Kunststofffolie

## Patentansprüche

1. Faltbare Karte (1), insbesondere Radwander- oder Wanderkarte, umfassend einen bedruckten Kartenbogen (2), **dadurch gekennzeichnet, dass** der Kartenbogen (2) beidseitig eine wasserabweisende Beschichtung aufweist.

2. Faltbare Karte (1) nach Anspruch 1, **dadurch gekennzeichnet, dass** die wasserabweisende Beschichtung beschreibbar ist.

3. Faltbare Karte (1) nach Anspruch 1 oder 2, **dadurch gekennzeichnet, dass** die wasserabweisende Beschichtung eine transparente Kunststofffolie (3, 4) umfasst.

4. Faltbare Karte (1) nach Anspruch 3, **dadurch gekennzeichnet, dass** die transparente Kunststofffolie (3, 4) auf den Kartenbogen (2) kaschiert ist.

5. Faltbare Karte (1) nach Anspruch 3 oder 4, **dadurch gekennzeichnet, dass** die Kunststofffolie (3, 4) Polypropylen aufweist.

6. Faltbare Karte (1) nach einem der Ansprüche 3 bis 5, **dadurch gekennzeichnet, dass** die Kunststofffolie (3, 4) orientiertes Polypropylen aufweist.

7. Faltbare Karte (1) nach einem der Ansprüche 3 bis 6, **dadurch gekennzeichnet, dass** die Kunststofffolie (3, 4) Polyethylen aufweist.

8. Faltbare Karte (1) nach einem der Ansprüche 3 bis 7, **dadurch gekennzeichnet, dass** die Kunststofffolie (3, 4) Polyester aufweist.

9. Faltbare Karte (1) nach einem der Ansprüche 3 bis 8, **dadurch gekennzeichnet, dass** die Kunststofffolie (3, 4) Acetat aufweist.

10. Faltbare Karte (1) nach Anspruch 3 oder 4, **dadurch gekennzeichnet, dass** die Kunststofffolie (3, 4) Polyethylenterephthalat aufweist.

11. Faltbare Karte (1) nach einem der Ansprüche 1 bis 10, **dadurch gekennzeichnet, dass** der Kartenbogen (2) Papier mit einer Grammatur zwischen 80 und 150 g/m², vorzugsweise zwischen 100 und 130 g/m², insbesondere zwischen 110 und 120 g/m² umfasst.

12. Faltbare Karte (1) nach einem der Ansprüche 3 bis 11, **dadurch gekennzeichnet, dass** die Dicke der Kunststofffolie (3, 4) 7 bis 25 Mikrometer, vorzugsweise 10 bis 20 Mikrometer, insbesondere 12 bis 15 Mikrometer beträgt.
